# EUROPEAN PATENT APPLICATION

(11) **EP 2 237 147 A2**
(43) Date of publication of application: **06.10.2010**
(21) Application number: 10158037.1
(22) Date of filing: 26.03.2010
(51) Int. Cl.: G06F 3/12

(54) **Image forming apparatus**

(30) Priority: 30.03.2009 JP 2009081237
(71) Applicant: Oki Data Corporation, Tokyo 108-8551 (JP)
(72) Inventor: Hirama, Kenichi, Tokyo 108-8551 (JP)
(74) Representative: Pisani, Diana Jean

(57) **Abstract**

A job managing section stores print jobs as jobs-in-queue when they are received through a receiving section (27). Each job contains original user information. Each job is a currently executed job when it is being executed by an executing section (31) . An error detecting section (32) obtains error information from the executing section upon an error in the currently executed job. An updating section (34) stores the currently executed job as a job-on-hold into the job managing section if a determining section (33) determines that the currently executed job should be placed on hold. A log-in authenticating section (37) performs authentication of an operator user based on the operator user information inputted by the operator user. Upon successful authentication, a user name comparing section (38) determines whether the operator user information and the original user information contained in the job-on-hold coincide. If they coincide, a displaying section indicates to the operator user that a job-on-hold exists.

## Description

### BACKGROUND OF THE INVENTION

### FIELD OF THE INVENTION

The present invention relates to an image forming apparatus that prints an image in accordance with image data, and more particularly to an image forming apparatus that performs log-in authentication on an operator or a user.

Printers and multi-function printers (MFPs) incorporating a printer section and a scanner therein are among known image forming apparatuses capable of performing a log-in authentication function.

Printers and MFPs are usually configured to place restriction on individual users or on the particular functions available to the users. The control/operation section of an image forming apparatus, e.g., a touch screen panel is commonly configured to display a log-in screen through which a user (i.e., operator) who operates the image forming apparatus inputs user information such as a user name and a user password.

Authentication is performed based on the user information to determine whether the operator user should be allowed to log on. The operator user is allowed to use the image forming apparatus only when the authentication is successful.

When the print job is being executed, if an error occurs and printing stops, an error screen is displayed on the control/operation section.

If the error is due to, for example, paper out or paper jam, printing resumes as soon as the paper is replenished or the jammed paper is removed.

If the paper cassette do not hold paper of a size and a type specified by the print job, an error screen is displayed on the control/operation section and the printing is halted, then, the original user who has access to the print job walks to the image forming apparatus and logs on through the error screen and then changes the settings and/or inputs a command to forcibly print or terminate printing. This causes the image forming apparatus to remain idle until the error is solved.

Japanese Patent Application Laid-Open No. 2005-262864 discloses the technology in which an operator user is given access so that printing can be resumed even when an error occurs in the middle of execution of the print job.

However, when an error occurs in the middle of execution of the printing job, displaying of the error screen overrides the operation of the image forming apparatus, so that the image forming apparatus still remains unable to print. In addition, the operator user may change the printer settings and command forcibly printing and/or abort printing.

### SUMMARY OF THE INVENTION

An image forming apparatus performs authentication of users.

A receiving section (27) receives print jobs each of which contains corresponding original user information. A job managing section (21) stores the print jobs as jobs-in-queue. An executing section (31) executes the jobs-in-queue each of which is a currently executed job when it is executed. A controller (39) causes the executing section (31) to execute the jobs-in-queue. An error detecting section (32) detects an error in the image forming apparatus when the currently executed job is being executed, and then obtains error information indicative of the error from the executing section. A determining section (33) determines, based on the error information, whether the currently executed job should be placed on hold. An updating section (34) updates the job managing section (21, 21-3) by storing the currently executed job as a job-on-hold into the job managing section if the determining section (33) determines that the currently executed job should be placed on hold. An operator user inputs operator user information through a log-in section (36) for log-in authentication. A log-in authenticating section (37) performs authentication of the operator user based on the operator user information. A user name comparing section (38) searches, upon establishment of the authentication, the job managing section (21, 21-3) to determine whether the operator user information and the original user information contained in the job-on-hold coincide. If the operator user information coincides with the original user information contained in the job-on-hold, a displaying section (16, 25) indicates to the operator user that a job-on-hold exists, the indication being made.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limiting the present invention, and wherein:
Fig. 1 is a block diagram illustrating an exemplary configuration of a printer;
Figs. 2A-2C illustrate a job management table;
Figs. 3A-3B illustrate a pending job table;
Fig. 4 illustrates a user management table;
Fig. 5 illustrates an error information table;
Fig. 6 is a block diagram illustrating the functions of the respective sections of the printer according to a first embodiment;
Fig. 7 illustrates an example of a PJL job;
Fig. 8 illustrates an example of a log-in screen;
Fig. 9 illustrates an example of a pending error screen that displays a message that informs the user of a pending job.
Fig. 10 is a flowchart illustrating a job receiving operation of the printer in which a PJL job containing a print job therein is received from a host computer;
Fig. 11 is a flowchart illustrating a job executing processing of the printer;
Figs. 12A-12C illustrate the job managing table;
Fig. 13 is a flowchart illustrating an error handling;
Fig. 14 is a flowchart illustrating a log-on processing;
Fig. 15 is a flowchart illustrating the pending job processing;
Fig. 16 is block diagram illustrating the functions of the respective sections of a printer according to a second embodiment;
Fig. 17 illustrates an example of a log-in screen.
Fig. 18 is a flowchart illustrating an error handling in the second embodiment; and
Fig. 19 is a flowchart illustrating the pending job processing of the second embodiment.

### DETAILED DESCRIPTION OF THE INVENTION

### First Embodiment

Embodiments of the present invention will be described with reference to the accompanying drawings. The invention will be described with respect to an electrophotographic LED printer.

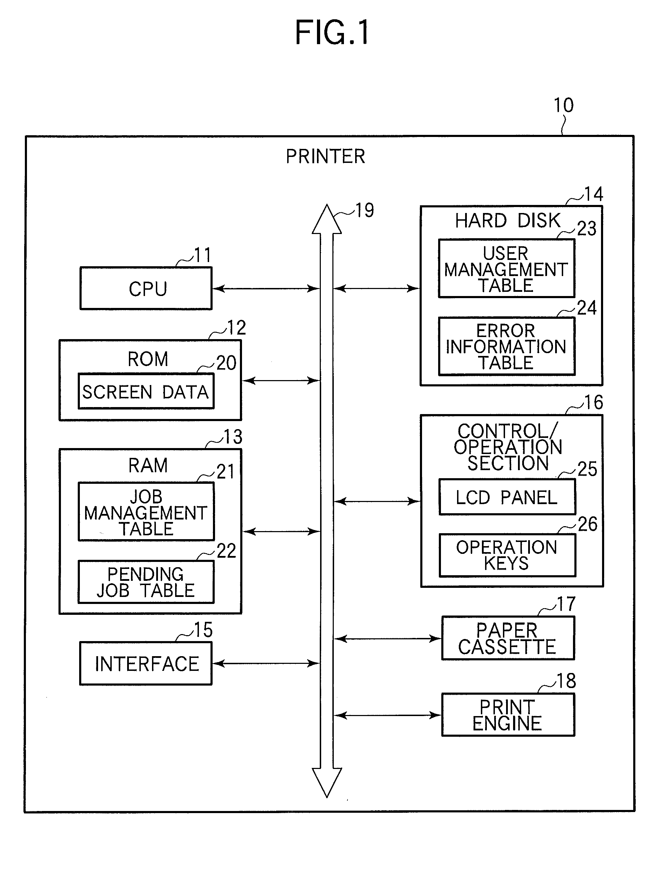

Fig. 1 is a block diagram illustrating an exemplary configuration of a printer of the invention. Referring to Fig. 1, a printer 10 includes a central processing unit (CPU) 11, a read only memory (ROM) 12, a random access memory (RAM) 13, a hard disk 14, an interface 15, a control/operation section 16, a paper cassette 17, and an image forming section or a print engine 18. These sections communicate with one another via a system bus 19.

The CPU 11 takes the form of, for example, a microprocessor, and performs the overall control of the printer 10. The CPU 11 executes a control program (firmware) stored in the ROM 12 communicating with the RAM 13 as a working memory.

The ROM 12 is a non-volatile memory that stores the control program for controlling the respective sections of the printer 10. The ROM 12 holds screen data 20 used for a variety of screens to be displaced on the control/display section 16.

The RAM 13 is a volatile memory. When the CPU 11 executes the control program, the RAM 13 communicates with the CPU 11 and temporarily holds a variety of data. As shown in Fig. 1, the RAM 13 holds a job managing section or a job management table 21 and a pending job table 22.

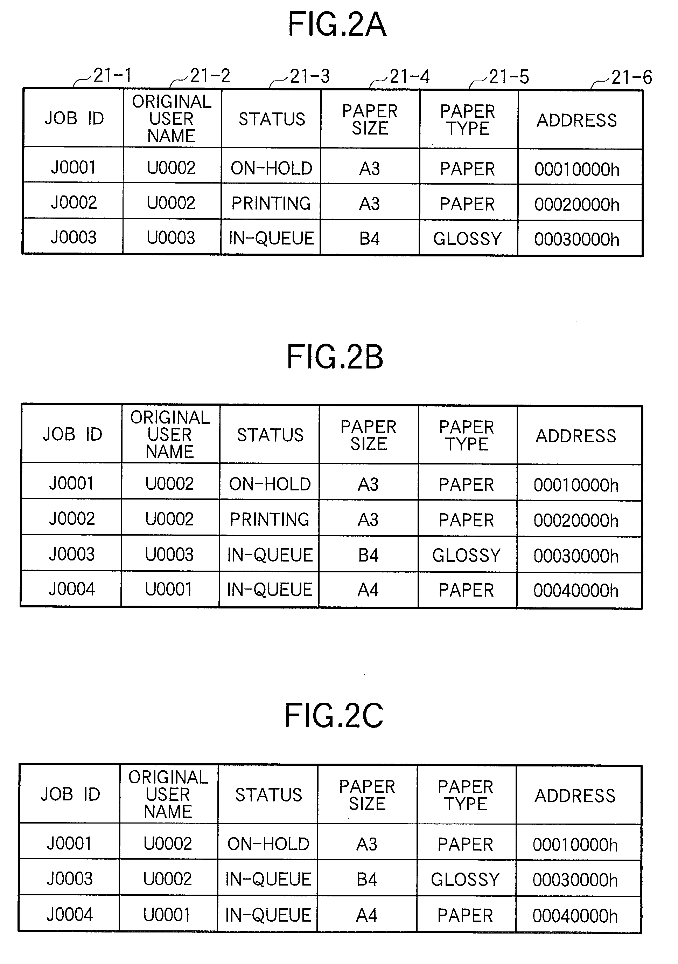

Figs. 2A-2C illustrate the job management table 21.

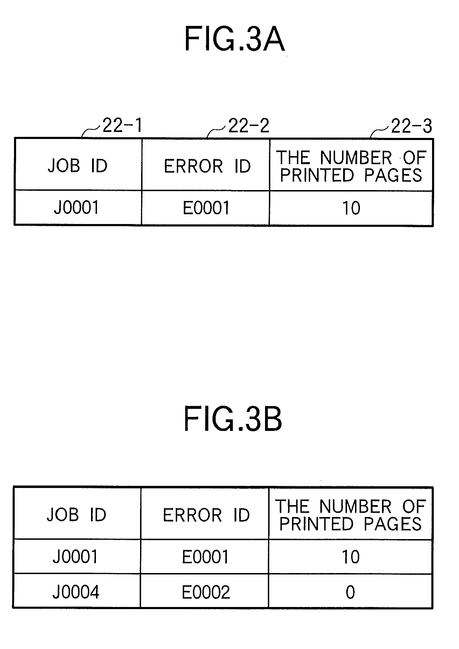

Figs. 3A-3B illustrate the pending job table 22.

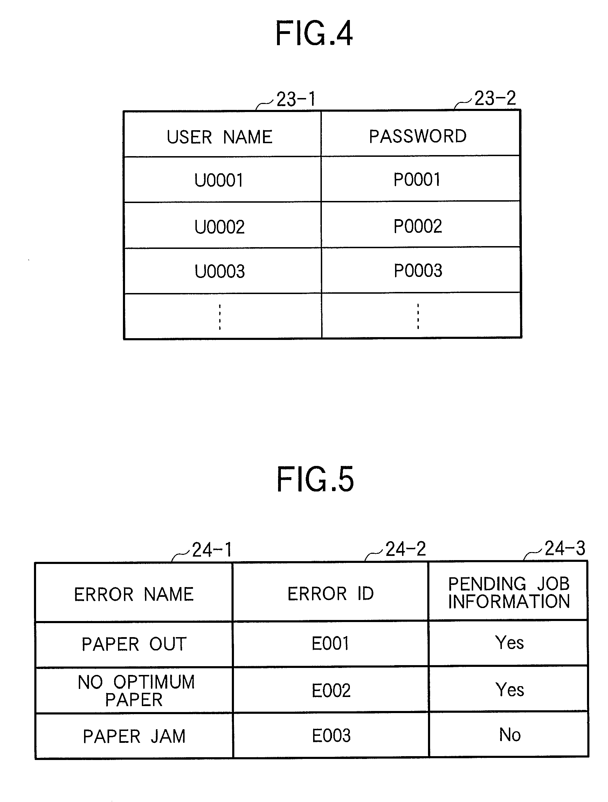

Fig. 4 illustrates a user management table 23.

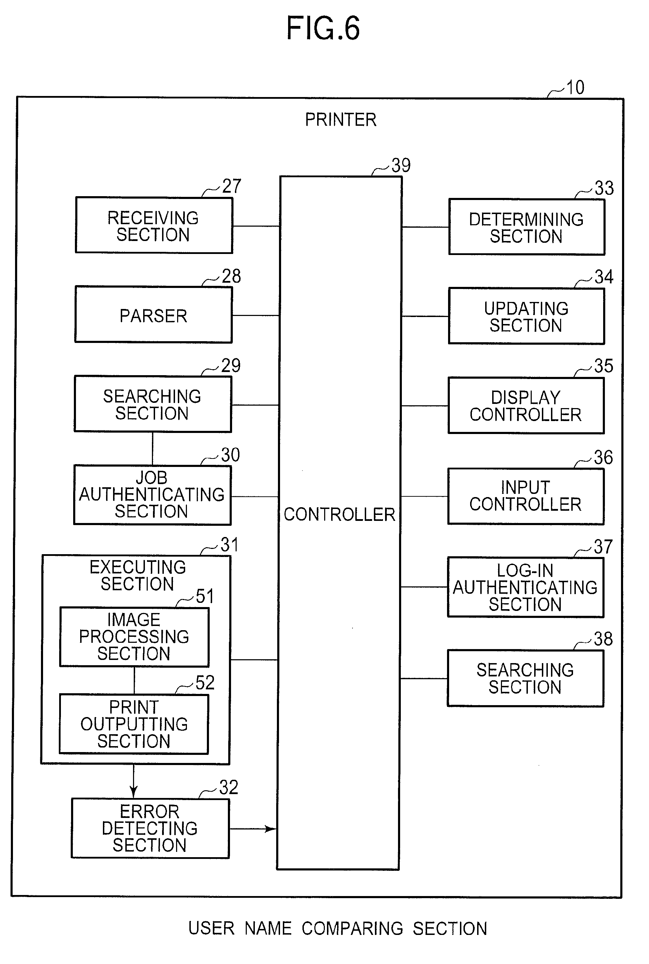

Fig. 6 illustrates an error information table 24.
The job management table 21 or a job managing section stores data for managing print jobs that have not been printed yet.

As shown in Figs. 2A-2C, the job management table 21 includes a job ID field 21-1, an original user name field 21-2, a status field 21-3, a paper size field 21-4, a type of paper field 21-5, and an address field 21-6.

The job ID field 21-1 holds job identifying information or job IDs that identify respective print jobs. Each time a print job is received from an external apparatus, the print job is assigned a job ID.

The original user name field 21-2 holds the original user name or the name of an original user who has access to the print job. The original user name is obtained from the received print job.

The status field 21-3 holds the status information about the status of a corresponding print job. The status information is either "IN-QUEUE," "BEING EXECUTED," and "ON-HOLD." "IN-QUEUE" indicates that printing of a corresponding print job has not started yet. "BEING EXECUTED" indicates that a corresponding print job is being executed. "ON-HOLD" indicates that a corresponding print job is placed on hold due to an error in the middle of execution. A job either in the status "IN-QUEUE," "BEING EXECUTED," or "ON-HOLD" is referred to a job-in queue, a job-being printed, or a pending job, respectively, in the specification.

The paper size field 21-4 holds paper size data that describes the size of paper specified by a print job. The paper type field 21-5 holds data that describes the type of paper specified by the print job. In the specification, the term "paper data" covers both the paper type data and the paper size data.

An address field 21-6 holds address data that describes an address in a PDL data storage area in the RAM 13. The address data represents a top address of an area into which later described PDL data obtained from a print job is stored.

The job management table 21 shown in Fig. 2A stores a job ID "J0001," an associated original user name "U0002", status information "ON-HOLD", paper size data "A3", paper type data "PLAIN PAPER", and address data "0001000h." "U0002" represents the name of an original user who has access to the print job. "A3" and "PLAIN PAPER" indicate that the specified paper is A3 size plain paper. The address "0001000h" indicates that the PDL data for the print job is stored in the PDL data storage area at addresses starting with "0001000h."

The job management table 21 may also include other fields for, for example, the number of copies, print layout, date and time of reception of print jobs.

The pending job table 22 or an on-hold information storing section is an area that stores data for managing the pending jobs. Figs. 3A and 3B illustrate the configurations of the pending job table 22.

Referring to Figs. 3A-3B, the pending job table 22 includes a job ID field 22-1, an error ID field 22-2, and a number-of-printed pages field 22-3.

The job ID field 22-1 stores the job IDs for identifying the respective pending jobs.

The error ID field 22-2 stores error IDs representative of the types of errors that caused a print job to be placed on hold.

The number-of-printed pages field 22-3 stores the number of printed pages of a print job before the print job is placed on hold.

For example, the pending job table 22 shows a job ID "J0001" and an associated error ID "E0001", the number of printed pages "10." More specifically, the print job "J0001" has been placed on hold due to an error indicated by "E0001," and the number of printed pages before the print job is placed on hold is "10."

The RAM 13 includes a PDL area (not shown) for storing the PDL data therein and an image buffer (not shown) for storing the image data therein.

The hard disk 14 is a memory that stores fixed data, for example, font data used for generating image data from the print job. The hard disk 14 includes a user management table 23 and an error information table 24 as shown in Fig. 1.

A user information storage area or the user management table 23 stores user information about previously registered users.

The user management table 23 has a user name field 23-1 and a pass word field 23-2 as shown in Fig. 4.

The user name field 23-1 holds user identifying information indicative of individual user names. The password field 23-2 stores the passwords of the registered users. The user information, i.e., user names and passwords are inputted by an administrator through the later described control/operation section 16, and are used for an operator user to log on or for a received print job to be authenticated. The user identifying information may further include the IP address of a host PC, the unique name of a PC and a user ID (e.g., employee number), which identify an individual user. It is to be noted that a password may be shared by more than one user.

The error information table 24 or an error information storage area stores error information. Fig. 5 illustrates the configuration of the error information table 24.

The error information table 24 has an error name field 24-1, an error ID field 24-2, and a pending job field 24-3.

The error name field 24-1 stores error names, for example, "PAPER OUT," "NO OPTIMUM PAPER, and "PAPER JAM." The "PAPER OUT" indicates that the paper in the paper cassette has been exhausted. "NO OPTIMUM PAPER" indicates that none of the paper cassettes holds the paper specified by a received print job.

The error ID field 24-2 stores error IDs for identifying errors.

The pending job field 24-3 stores pending job information indicative of whether a print job should be placed on hold. If the pending job information is "YES," the job should be placed on hold. If the pending job information is "NO," the job should not be placed on hold.

For example, the error information table 24 shown in Fig. 5 holds the pending job information "YES" for the error name "PAPER OUT" and the error ID "E0001." Also, the error information table 24 holds the pending job information "YES" for the error name "NO OPTIMUM PAPER" and an error ID "E0002." These items of information imply that a print job is placed on hold if "PAPER OUT" or "NO OPTIMUM PAPER" occurs in the middle of execution of the print job.

The error information table 24 shown in Fig. 5 also stores the error name "PAPER JAM" and error ID "E0003" and associated pending job information "NO." These items of information indicate that the job is not placed on hold if the error "PAPER JAM" occurs.

The user management table 23 and the error information table 24 may also be stored in other memory, for example, the ROM 12 or a flash memory.

An interface 15 includes, for example, a local area network (LAN) interface and/or a universal serial bus (USB) interface, and is used for communication with an external apparatus such as a host computer (not shown).

The control/operation section 16 includes a touch screen LCD panel 25 that displays the status of and information on the printer 10, and operation keys 26 with which the operator user inputs his selections and a variety of items of information.

While the control/operation section 16 includes an LCD touch screen 25 and operation keys, the LCD touch screen 25 may be replaced by a monitor or an LCD, connected to the image forming apparatus via a D-subminiature. The operation keys may be replaced by a key board connected to the image forming apparatus via a USB cable.

The paper cassette 17 holds print medium or paper therein. The printer 10 includes two paper cassettes 17. One of the paper cassettes 17 holds A3 size plain paper corresponding to the paper size "A3" and the type of paper "PAPER," and the other of the paper cassettes 17 holds B4 size gloss paper corresponding to the paper size "B4" and the type of paper "GLOSSY".

The CPU 11 controls the print engine 18 to print on the paper fed from the paper cassette 17 on a page-by-page basis, images being printed in accordance with image data, which will be described later.

The control system of the printer 10 will be described. Fig. 6 is a block diagram illustrating the functions of the respective sections of the printer 10.

Referring to Fig. 6, the printer 10 includes a receiving section 27, a parser 28, a searching section 29, a job authenticating section 30, an executing section 31, an error detecting section 32, a determining section 33, an updating section 34, a display controller 35, an inputting section or a log-in section 36, a log-in authenticating section 37, a user name comparing section 38, and a controller 39.

The receiving section 27 receives a printer job language (PJL) job from the host computer (not shown) via the interface 15. The PJL job is data described in the printer job language PJL, and contains a print job therein.

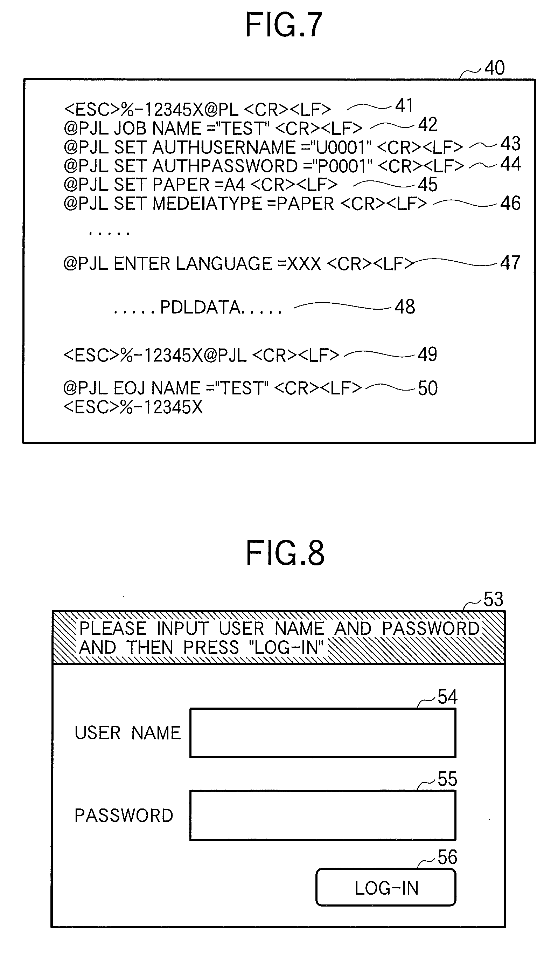

Fig. 7 illustrates an example of a PJL job 40. Referring to Fig. 7, the PJL job 40 contains a UEL command 41, a JOB command 42, SET commands 43-46, an ENTER command 47, PDL data 48, an EOJ command 49, and a UEL command 50.

The UEL command 41 is command data indicative of a starting position of the PJL job. The JOB command 42 is command data indicative of a starting position of the print job.

The SET command 43 is command data for specifying an original user name of the print job, who is a user that uses the host computer from which the PJL job is sent to the print 10. The original user name specified by the SET command 43 is used in the job authenticating section 30, which will be described later. By way of example, the SET command 43 of the PJL job 40 shown in Fig. 7 contains a user name "U0001."

The SET command 44 is command data for specifying a password used in the job authenticating section 30. By way of example, the SET command 44 of the PJL job 40 shown in Fig. 7 contains a password "P0001."

The SET command 45 is command data for specifying the size of paper. The SET command 45 of the PJL job 40 shown in Fig. 7 contains paper size data "A4."

The SET command 46 is command data for specifying the type of paper. The SET command 46 of the PJL job 40 shown in Fig. 7 contains paper type data "PAPER."

The ENTER command 47 is command data for switching the control language from the PJL to a page description language (PDL).

The PDL data 48 is image data described in the PDL.

The EOJ command 49 is command data indicative of an ending position of the print job. The UEL command 50 is command data indicative of an ending position of the PJL job.

As described above, the receiving section 27 receives a PJL job containing a print job from an external apparatus through the interface 15. The receiving section 27 may also receive a print job generated in the printer 10, including a print job for printing a report relating to the configuration of the printer 10.

The parser 28 parses the PJL job received in the receiving section 27 to obtain the user information containing the original user name and original user password. The parser 28 also obtains, from the PJL job, PDL data and the paper data that contains the paper size data and the paper type data.

The searching section 29 searches the user management table 23 (Fig. 4) by using a user name to obtain a password associated with the user name. The searching section 29 also searches the error information table 24 (Fig. 5) by using an error ID to obtain associated pending job information. The searching section 29 searches the job management table 21 (Figs. 2A-2C) by using the original user name and the pending job table 22 (Figs. 3A-3C) by using the job ID.

The job authenticating section 30 performs authentication based on the original user information obtained by the parser 28 and the user management table 23 (Fig. 4) to determine whether the original user is a registered user.

Upon reception of original user information from the controller 39, the job authenticating section 30 commands the searching section 29 to search the user name field 23-1 of the user management table 23 to find a user name. Then, based on the search results, the job authenticating section 30 determines whether the original user name and one of the registered user names coincide. If they do not coincide, the job authenticating section 30 determines that the original user is not a registered user. If they coincide, the job authenticating section 30 commands the searching section 29 to obtain a password. Once the searching section obtains a password from the password field 23-2 of the user management table 23, the authenticating section 30 determines whether the obtained password and the password contained in the original user information coincide. If they coincide, the job authenticating section 30 determines that the original user is a registered user. If they do not coincide, the authenticating section 30 determines that the original user is not a registered user. The authentication results are sent to the controller 39.

The executing section 31 includes an image processing section 51 and a print outputting section 52 and performs a function of executing a print job.

The image processing section 51 obtains the PDL data from the PDL data storage area (not shown) of the RAM 13, and then renders the PDL data into image data for printing. The image processing section 51 stores the generated image data into the image buffer (not shown) in the RAM 13.

The print outputting section 52 drives the print engine 18 (Fig. 1) to print an image on the paper, which meets the paper data, in accordance with the image data obtained from the image buffer in the RAM 13.

The error detecting section 32 monitors the executing section 31 to detect occurrence of errors while a print job is executed (i.e., printed), and obtains an error ID associated with the detected error and informs the controller 39 of the error.

For example, if the paper in the paper cassette 17 is exhausted in the middle of the execution of a print job, the error detecting section 32 detects "PAPER OUT" and obtains the error ID "E0001."

The determining section 33 determines based on pending error information obtained by the error detecting section 32 whether the print job should be placed on hold. If the pending error information is "YES," the determining section 33 determines that the print job should be placed on hold. If the pending error information is "NO," the determining section 33 determines that the print job should not be placed on hold. The decision results are sent to the controller 39.

The updating section 34 updates the job management table 21 and pending job table 22 in the RAM 13.

The display controller 35 controls the touch screen LCD panel 25 of the control/operation section 16. The display controller 35 reads the screen data 20 from the ROM 12 so as to display a log-in screen for log-in authentication or a pending error screen for indicating whether the print job should be placed on hold. The screen data 20 include screen data associated with the error ID "E0002" and screen data associated with the error ID "E0001".

Fig. 8 illustrates an example of the log-in screen. A log-in screen 53 is displayed on the display controller 35 if no user is currently logged on. The log-in screen 53 includes a user name inputting box 54 into which the name of operator user is inputted, a password inputting box 55 into which the password of the operator user is inputted, and a log-in button 56 for confirming the inputted operator user name and operator password.

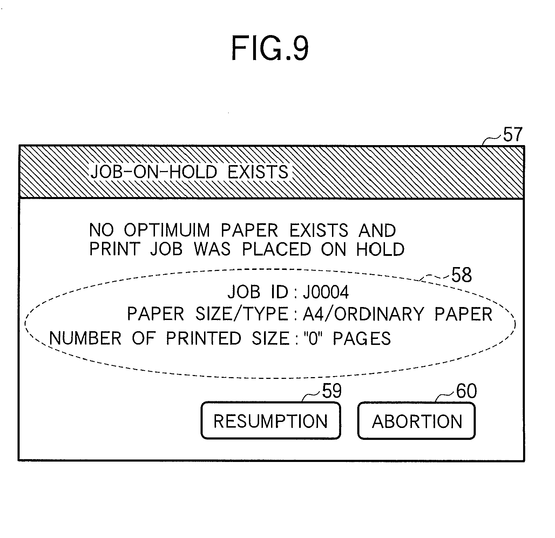

Fig. 9 illustrates an example of the pending error screen that displays a message that informs the user of a pending job. A pending error screen 57 includes a pending job information area 58 that displays a job ID of a pending job, paper data, and the number of printed pages, a resumption button 59 for commanding the resumption of the execution of the pending job, and an abortion button 60 for commanding the abortion of the pending job.

By way of example, the pending error screen 57 shown in Fig. 9 is displayed based on the screen data associated with the error ID "E0002".

The inputting section 36 or an inputting section controls the touch screen LCD panel 25 and operation keys 26 of the control/operation section 16 for assisting the user to input the operator user information, i.e., the operator user name and operator password. The inputting section 36 also controls the reception of a command to resume the execution of the pending job or a command to abort the pending job.

A log-in authenticating section 37 performs authentication based on the operator user information and the content of the user management table 23 (Fig. 4) to determine whether the operator user is a registered user.

Upon reception of the operator user information from the controller 39, the log-in authenticating section 37 commands the searching section 29 to search the user name field 23-1 of the user management table 23 for a user name. Then, based on the search results, the log-in authenticating section 37 determines whether the operator user name and one of the registered user names coincide. If they do not coincide, it is determined that the operator user is not a registered user. If they coincide, the log-in authenticating section 37 commands the searching section 29 to obtain the password from the password field 23-2 in the user management table 23, thereby determining whether the obtained password and the operator password contained in the operator user information coincide. If they coincide, the log-in authenticating section 37 determines that the operator user is a registered user. If they do not coincide, the log-in authenticating section 37 determines that the operator user is not a registered user. The authentication results are sent to the controller 39.

The log-in authenticating section 37 of the first embodiment performs authentication based on the user name and password. However, the present invention is not limited to this. Authentication may also be performed by using, for example, a personal identification number (PIN), biometric information, or an IC card. The log-in authenticating section 37 is housed in the printer 10 so that the authentication is performed in the printer 10. Still alternatively, the authentication information may be sent to an external authenticating apparatus via an interface 15 (Fig. 1).

The user name comparing section 38 searches the user name field 21-2 of the job management table 21 and determines whether the original user name of the print job and the operator user name coincide, thereby determining whether a print job is associated with the name of operator user. The user name comparing section 38 also searches the status field 21-3 of the job management table 21 and determines whether the pending job associated with the operator user exists. If a pending job exists, the user name comparing section 38 obtains a job ID from the associated job ID field 21-1, and notifies the controller 39 of the job ID.

The controller 39 controls the aforementioned respective sections in the printer 10.

The operation of the printer 10 will be described.

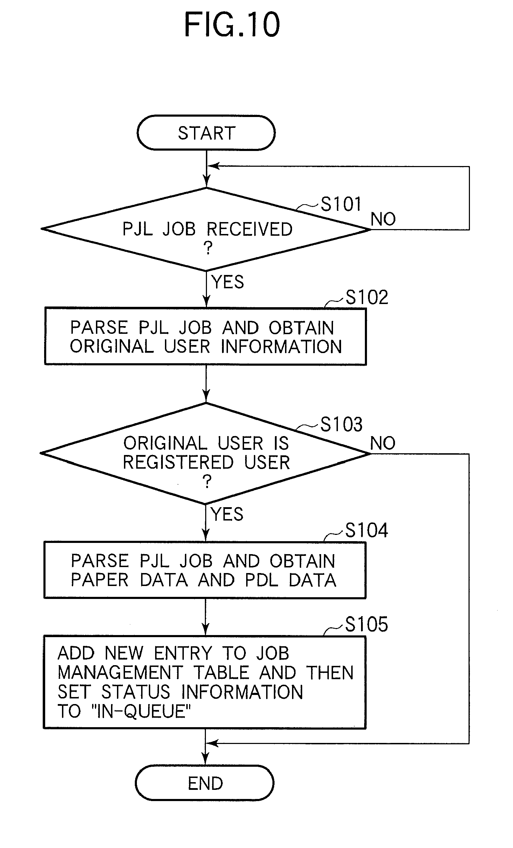

Fig. 10 is a flowchart illustrating a job receiving operation of the printer 10 in which a PJL job 40 containing a print job therein is received from a host computer. The flow will be described with reference to Fig. 10.

The job receiving processing will be described with respect to the PJL job 40 shown in Fig. 7.

Upon reception of the PJL job 40 (step S101), the receiving section 27 stores the PJL job 40 into a receiving buffer (not shown).

The parser 28 parses the PJL job 40 stored into the receiving buffer under the control of the controller 39, and obtains the original user information (step S102). More specifically, the parser 28 obtains the original user name "U0001" from the SET command 43 of the PJL job 40 and the original user password "P0001" from the SET command 44, and notifies the controller 39 of the original user name "U0001" and the original password "P0001."

Subsequently, the controller 39 notifies the job authenticating section 30 of the original user information, and then the job authenticating section 30 performs authentication to determine whether the original user is a registered user (step S103). The job authenticating section 30 notifies the searching section 29 of the original user name "U0001," and commands the searching section 29 to search the user management table 23 (Fig. 4) for the original user name "U0001." If it is determined that the original user name "U0001" is present in the user management table 23, then the job authenticating section 30 commands the searching section 29 to obtain the operator password. The searching section 29 obtains the operator password "P0001" associated with the original user name "U0001" from the user management table 23, and notifies the job authenticating section 30 of the original user name "U0001." If the notified operator password "P0001" and the original user password "P0001" coincide, the job authenticating section 30 determines that the original user is a registered user, and notifies the controller 39 of the results of authentication.

Once it is determined that the original user is a registered user, the parser 28 parses the PJL job 40 under the control of the controller 39, and obtains the paper data and PDL data (step S104). The parser 28 obtains the paper size data "A4" from the SET command 45 of the PJL job 40 and the paper type data "PAPER" from the SET commands 46. The parser 28 also obtains PDL data 48 from the PJL job 40. The thus obtained PDL data 48 is stored into a PDL data area (not shown) of the RAM 13, and the controller 39 obtains address data "0004000h" which corresponds to the position of the top of the PDL data 48.

The updating section 34 updates the job management table 21 under the control of the controller 39 (step 105). The updating section 34 adds a new entry to the job management table 21 (Fig. 2A) and sets a new job ID "J0004" in the job ID field 21-1 as shown in Fig. 2B. Also, the updating section 34 stores the user name "U0001," the paper size data "A4," and the paper type data "PAPER" into the user name field 21-2, the paper size field 21-4, and the paper type field 21-5, respectively. The updating section 34 also stores the address data "0004000h" of the PDL data into the address field 21-6 and then sets the status information "IN-QUEUE" in the status field 21-3.

As described above, upon the reception of a PJL job, authentication is performed and then the job management table 21 is updated before the print job is stored as a job-in-queue.

If it is determined at step S103 that the original user name is not listed in the user management table 23 or the original user password is not a registered password, then the job authenticating section 30 determines that the original user is not a registered user, and notifies the controller 39 of the authentication results. The controller 39 then erases the PJL job held in the receiving buffer and the job receiving processing of the printer 10 ends.

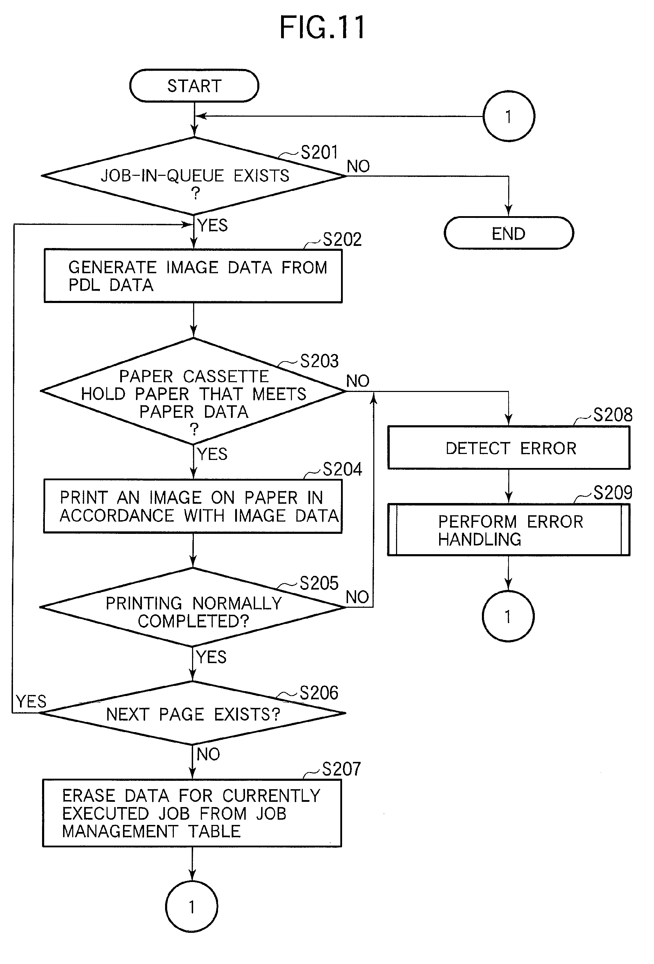

Fig. 11 is a flowchart illustrating a job executing processing of the printer 10. The flow in which the print job is executed will be described with respect to the flowchart shown in Fig. 11.

A description will be given of a case in which the print job having the job ID "J0002" is executed without any error.

The executing section 31 of the printer 10 monitors the job management table 21 to detect a job-in-queue (step S201). The executing section 31 detects a job-in-queue from the status information "IN-QUEUE" based on the status information held in the status field 21-3 of the job management table 21. At this moment, it is assumed that the status information "IN-QUEUE" is held in the status field 21-3 and corresponds to the job ID "J0002." The executing section 31 notifies the controller 39 of the job ID "J0002" which is a job-in-queue that should be executed as a currently executed job. Then, the updating section 34 updates the content of the status field 21-3 corresponding to the notified job ID with the status information "BEING EXECUTED" as the status information as shown in Fig. 2B.

Subsequently, the image processing section 51 of the executing section 31 generates image data based on the PDL data (step S202). The image processing section 51 obtains the address data "00020000h" corresponding to the PDL data of the currently executed job from the address field 21-6 corresponding to the job ID "J0002" of the job management table 21 (Fig. 2B). Based on the address data, the image processing section 51 obtains PDL data for one page from the PDL data area in the RAM 13. The image processing section 51 renders the PDL data into image data for one page. The generated image data is stored into the image buffer in the RAM 13.

The print outputting section 52 checks the paper cassette 17 to determine whether the optimum print paper is present in the paper cassette 17. The print outputting section 52 obtains the paper data for the currently executed job from the job management table 21, and makes a decision to determine whether the paper held in the paper cassette 17 meets the paper data, i.e., paper size and paper type (step S203). The print outputting section 52 obtains the paper data, i.e., paper size data "A3," and paper type data "PAPER" from the paper size field 21-4 and the paper type field 21-5, respectively. Then, the print outputting section 52 confirms that the paper cassette 17 holds A3 plain paper which meets the paper size data and paper type data.

The print outputting section 52 controls the print engine 18 so that the paper is fed from the paper cassette 17 and an image is printed on the paper in accordance with the image data (step S204). The print outputting section 52 obtains the image data from the image buffer for printing, and also discharges the paper from the printer 10 after printing.

If printing is completed without error (YES at step S205), the image processing section 51 erases the PDL data for the page that has been printed successfully from the PDL data area, and then makes a decision to determine whether the next page exists in the PDL data area (step S206).

If the next page exists in the PDL data area (YES at step S206), the image processing section 51 obtains the PDL data for that page to generate the image data for that page (step S202). The image processing section 51 updates the address field 21-6 corresponding to the currently executed job of the job management table 21 with the address data corresponding to the starting position of that page. Then, the image processing section 51 obtains the PDL data for that page and renders the PDL data into image data, and overwrites the image data into the image buffer.

The print outputting section 52 makes a decision to determine whether the paper specified by a print job is present in the paper cassette 17 (step S203), and drives the print engine 18 to print the image on the paper (step S204).

If the printing completes without error (step S205), the image processing section 51 erases the PDL data for the printed page and makes a decision to determine whether the PDL data for the next page exists (step S206).

As described above, the steps S202-S206 are repeatedly executed. After all the pages have been printed normally, the updating section 34 erases the respective data for the currently executed job from the job management table 21 under the control of the controller 39 (step S207). Specifically, the original user name status information, paper data and address data for the job ID "J0002" are erased from the job management table 21 so that the job management table 21 looks as shown in Fig. 2C.

The executing section 31 detects the next job-in-queue from the job management table 21 (step S201). If a job-in-queue does not exist in the job management table 21 (NO at step S201), the printer 10 ends its operation.

As described above, jobs-in-queue are detected sequentially from the job management table 21 and the executing section 31 performs execution of the jobs-in-queue in order.

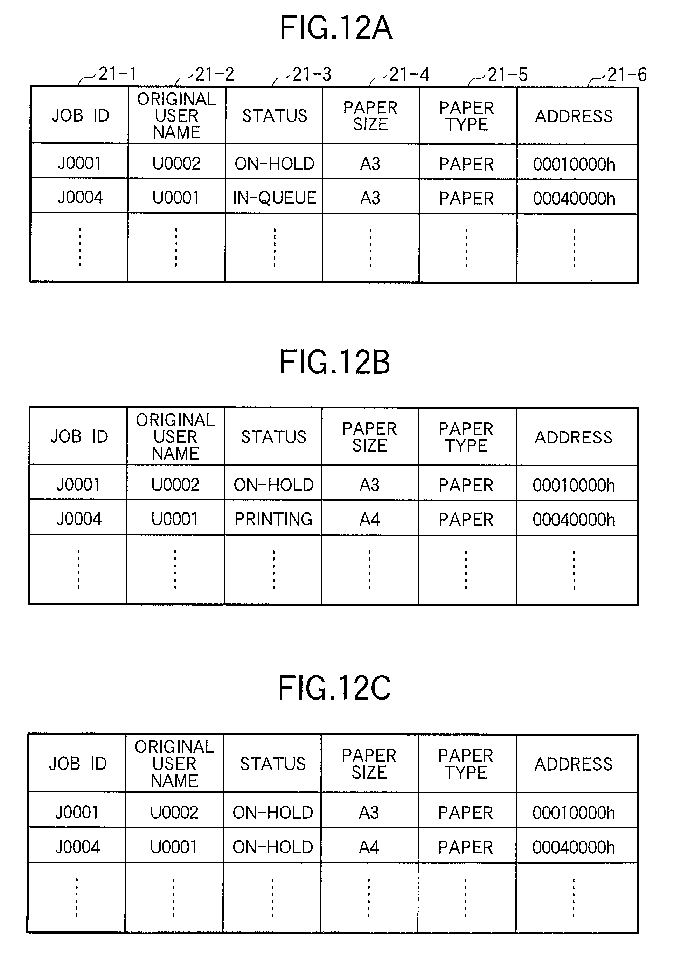

Fig. 12 is a second illustration of the job managing table 21. The flow in which the print job contained in the PDL job 40 (Fig. 7) is executed will be described with reference to the flowchart shown in Figs. 11 and 12.

The executing section 31 of the printer 10 detects a job-in-queue from the job management table 21 (Fig. 12A) (step S201). The executing section 31 detects the status information for a job ID "J0004," i.e., "IN-QUEUE" from the status field 21-3, and then notifies the controller 39 of the job ID "J0004" and updates the status information in the status field 21-3 with "BEING EXECUTED" as shown in Fig. 12B.

The image processing section 51 generates image data based on the PDL data for the first page and stores the image data into the image buffer (step S202).

The print outputting section 52 makes a decision to determine whether the paper cassette 17 holds print medium or paper that meets the paper data (step S203). The print outputting section 52 obtains the paper size data "A4" and the paper type data "PAPER" from the job management table 21 (Fig. 12B). Since the paper size data "A4" differs from either of paper sizes data "A3" or "B4" in the paper cassette 17, the print outputting section 52 determines that none of the paper cassettes holds the paper specified by a print job (step S203).

If the answer is NO at step S203, then the error detecting section 32 detects that an error occurred in the executing section 31 (step S208). Then, an error handling is carried out in the printer 10 (step S209). The details of the error handling will be described later.

Upon completion of the error handling, the printer 10 returns to step S201 where the executing section 31 of the printer 10 detects a job-in-queue from the job management table 21.

The printer 10 also performs the error handling (S209) if an error is detected (step S208) in the middle of execution (steps S202-S204) after it is determined that none of the paper cassettes 17 holds the paper specified by a print job (step YES at S203).

As described above, when the executing section 13 is executing the print job, if an error occurs, the error handling is performed.

### {ERROR HANDLING}

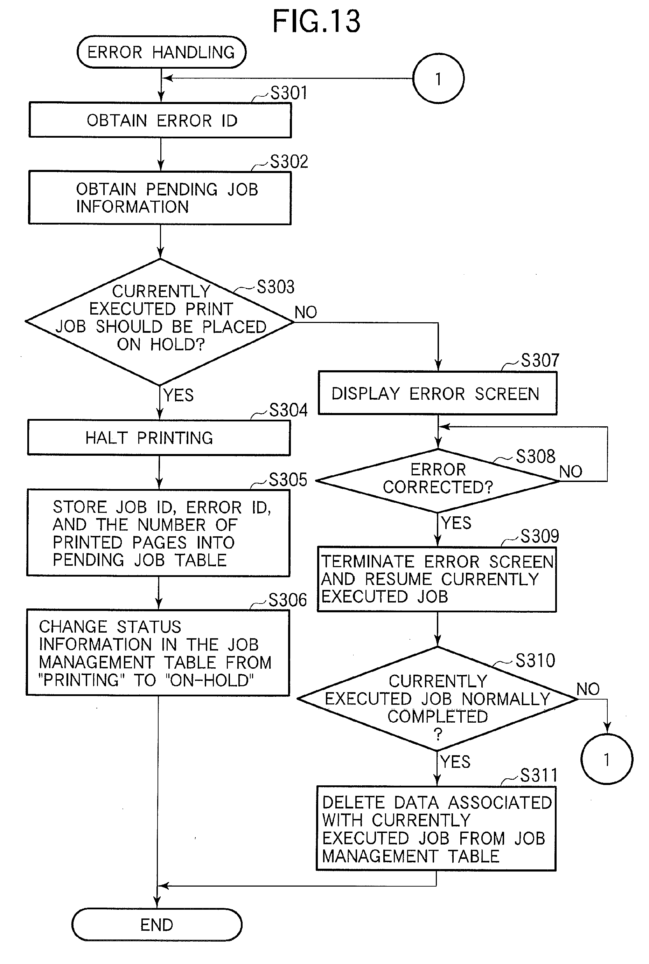

Fig. 13 is a flowchart illustrating the error handling. The error handling at step S209 shown in Fig. 11 will be described in detail with reference to Fig. 13.

### CASE #1

The operation will be described with respect to a case in which the error "NO OPTIMUM PAPER" occurs in the middle of the execution of the print job contained in the PJL job 40 shown in Fig. 7.

Upon detection of the occurrence of an error in the executing section 31, the error detecting section 32 obtains an error ID (step S301). The error detecting section 32 detects the occurrence of "NO OPTIMUM PAPER" and notifies the controller 39 of the error ID "E0002."

The controller 39 notifies the searching section 29 of the error ID "E0002," commanding the searching section 29 to obtain pending job information. Then, the searching section 29 searches the error information table 24 to obtain the pending job information, and notifies the controller 39 of the pending job information (step S302). The searching section 29 obtains the pending job information "YES" corresponding to the error ID "E0002" from the error information table 24 (Fig. 5).

The controller 39 notifies the determining section 33 of the pending job information to determine whether the currently executed job should be placed on hold. The determining section 33 makes a decision based on the notified pending job information to determine whether the currently executed job should be placed on hold (step S303). The determining section 33 determines based on the notified pending job information "YES" that the print job should be placed on hold, and notifies the controller 39 of the decision result.

The controller 39 controls the respective sections in the printer 10 for placing the currently executed job on hold. In response to the pending instruction from the controller 39, the executing section 31 halts the job currently execution by the image processing section 51 and the print outputting section 52 (step S304). The image processing section 51 halts generation of the image data, and erases image data that is being generated and image data that has been generated from the image buffer in the RAM 13. The print outputting section 52 halts generation of image data and notifies the controller 39 of "0" indicative of the number of printed pages.

The updating section 34 updates the pending job table 22 in response to the command from the controller 39 (step S305), so that the pending job table 22 holds the job ID "J0004," the error ID "E0002," and the number of printed pages "0" of the currently executed job, as shown in Fig. 3B.

The updating section 34 updates the job management table 21, i.e., the status field 21-3 corresponding to the halted job is changed from "BEING EXECUTED" to "ON-HOLD" as shown in Fig. 12C. This completes the error handling performed by the printer 10.

As described above, if the error "NO OPTIMUM PAPER" occurs, the currently executed job is placed on hold and the next job-in-queue is executed.

### CASE #2

An error handling when the error "PAPER JAM" occurs will be described in detail with reference to Fig. 13.

When the error detecting section 32 detects an error and obtains the error ID "E0003" (step S301), the searching section 29 obtains the pending job information "NO" from the error information table 24 under the control of the controller 39 (step S302). Then, the determining section 33 determines that the currently executed job should not be placed on hold (step S303).

Then, the display controller 35 causes the touch screen LCD panel 25 to display an error screen (not shown) in place of the log-in screen 53, notifying the operator user of "PAPER JAM" (step S307). If no operator user is currently logged on, the display controller 35 displays the log-in screen 53 (Fig. 8). The error screen overrides the log-in screen 53.

If the paper jam is corrected while the error screen is displayed on the touch screen LCD panel 25 and the printer 10 is again ready to print (YES at step S308), the display controller 35 no longer displays the error screen (step S309). Then, the executing section 31 resumes the currently executed job (step S309). The flow of processing the currently executed job is the same as that shown in Fig. 11, and its detailed description is omitted.

Upon normal completion of the currently executed job (step S310), the updating section 34 deletes the respective data associated with the currently executed job from the job management table 21 (step S311). This completes the error handling.

If an error occurs again after execution of a job-on-hold is resumed (step S310), the program jumps to step S301 where the printer 10 again performs the error handling.

As described above, once the "PAPER JAM" occurs, neither the currently executed job nor the next job-in-queue can be executed. Thus, the currently executed job is not placed on hold and is resumed upon recovery from the error.

### {LOG-IN PROCESS}

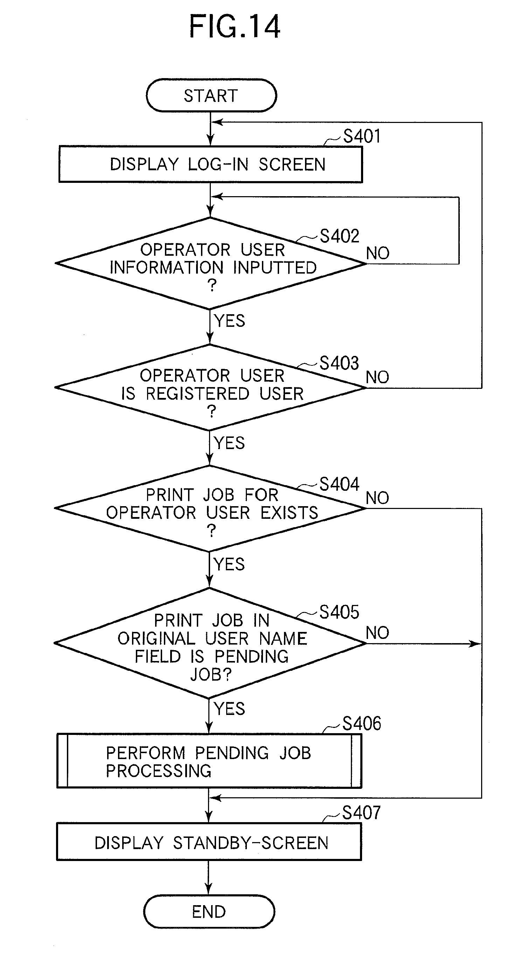

Fig. 14 is a flowchart illustrating a log-on processing. The operation of the printer 10 when the user logs on will be described with reference to Fig. 14.

Assume that a user having a user name "U0001" wishes to log on.

Upon power-up of the printer 10, the display controller 35 causes the touch screen LCD panel 25 to display the log-in screen 53 shown in Fig. 8 (step S401).

A software key board screen appears on the log-in screen 53 through which the user inputs characters or numerals into the user name inputting box 54 and numerals into the password inputting box 55. More specifically, the operator user inputs the operator user name "U0001" into the user name inputting box 54 via the software key board screen, and the password "P0001" into the password inputting box 55. Then, the operator user depresses the log-in button 56 to cause the inputting section 36 to direct the operator user information, which includes the operator user name "U0001" and the operator password "P0001," to the controller 39 (step S402).

Subsequently, the controller 39 notifies the log-in authenticating section 37 of the operator information, so that the log-in authenticating section 37 performs authentication of the operator user. The log-in authenticating section 37 performs authentication to determine whether the operator user is a registered user (step S403). The log-in authenticating section 37 notifies the searching section 29 of the operator user name "U0001", commanding to search for the same user name. If the operator user name "U0001" is listed in the user management table 23, the log-in authenticating section 37 commands the searching section 29 to obtain the operator password. The searching section 29 obtains the operator password "P0001" associated with the user name "U0001" from the user management table 23, and notifies the log-in authenticating section 37 of the operator password "P0001." Since the password "P0001" received from the searching section 29 matches the operator password "P0001," the log-in authenticating section 37 determines that the operator user is a registered user, and then notifies the controller 39 of the authentication result.

Once the operator user is authenticated as a registered user, the controller 39 notifies the user name comparing section 38 of the operator user name. The user name comparing section 38 searches the job management table 21 to check whether any print job for the operator user exists (step S404). Upon reception of the operator user name "U0001," the user name comparing section 38 searches the original user name field 21-2 of the job management table 21 (Fig. 12C), and determines that a print job for the operator user exists since the original user name field 21-2 holds an original user name that matches the operator user name "U0001."

If it is determined that a print job for the operator user exists (YES at step S404), the user name comparing section 38 makes a decision to determine whether the print job in the original user name field 21-2 is a pending job (step S405), the decision being made based on whether the status information held in the status field 21-3 is "ON-HOLD". The result at S405 is sent to the controller 39.

If the answer is "YES" at step S405, the printer 10 performs a pending job processing (step S406). The details of the pending job processing will be described later.

Upon completion of the pending job processing, the display controller 35 causes the touch screen LCD panel 25 to display a standby screen (not shown) (step S407). This completes the log-in processing. Then, the printer 10 performs the next processing in accordance with the commands from the operator user who is currently logged on.

As described above, if a pending print job for the operator user exists shortly after the successful authentication of the operator user, the pending job processing is performed.

If the answer is NO at step S403 (i.e., either the operator is not listed or the operator password is not held in the user management table 23, then the log-in authenticating section 37 determines that the operator user is not a registered, and notifies the controller 39 that the operator user should not be logged on. The display controller 35 causes the touch screen LCD panel 25 to display the log-in screen 53 again (step S401).

If the answer is NO at step S404 or if the answer is NO at step S405, the printer 10 will not perform the pending job processing and the standby screen is displayed (step S407).

### {PENDING JOB PROCESSING}

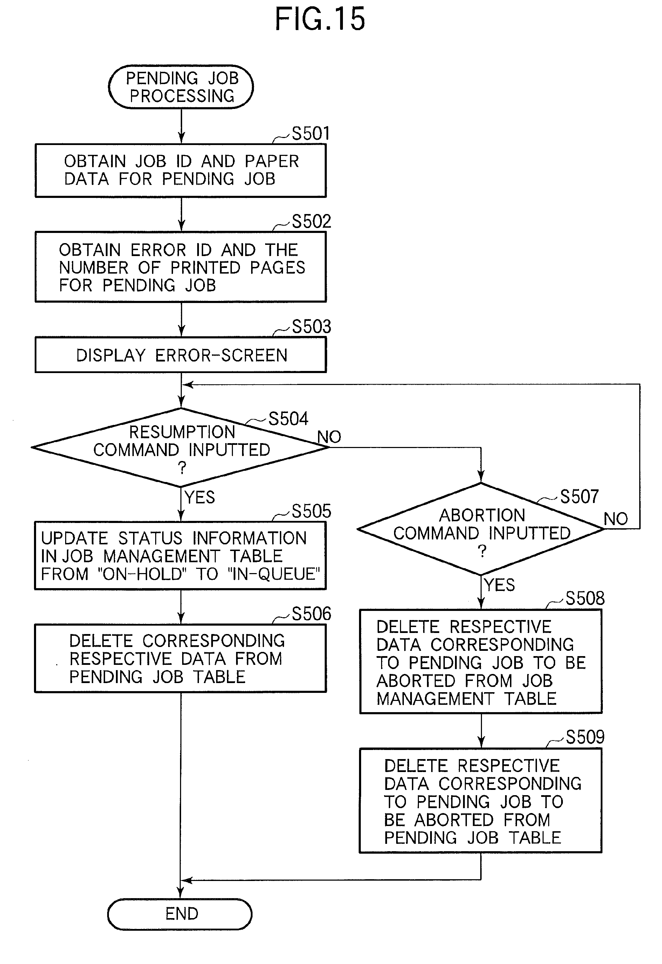

Fig. 15 is a flowchart illustrating the pending job processing. The details of the pending job processing performed at step S406 shown in Fig. 14 will be described with reference to Fig. 15.

When an operator user having the user name "U0001" logs on and the user name comparing section 38 determines that a pending job for the operator user exists, the user name comparing section 38 obtains "J0004", the paper size data "A4" and paper type data "PAPER" from the job management table 21 (Fig. 12C), and notifies the controller 39 of the job ID and the paper data (step S501). The user name comparing section 38 obtains the job ID "J0004", the paper size data "A4" and the paper type data "PAPER" from the job management table 21 (Fig. 12C).

The controller 39 notifies the searching section 29 of the job ID, and commands the searching section 29 to search the pending job table 22. In response to the command, the searching section 29 obtains the error ID "E0002" and the number of printed pages "0" associated with the job ID "J0004" from the pending job table 22 (Fig. 3B), and then notifies (step S502) the controller 39 of the error ID "E0002" and the number of printed pages "0".

Under the control of the display controller 35, the touch screen panel 25 displays the error screen 57 (step S503). The display controller 35 reads an item of the screen data associated with the error ID "E0002" from the screen data 20 held in the ROM 12, and the touch screen LCD panel 25 displays the error screen 57 that contains the job ID, paper data, and the number of printed pages as shown in Fig. 9.

The operator user checks the error screen 57 and places paper, which meets the paper size "A4" and paper type "PAPER," in any one of the paper cassettes 17, and then depresses the resumption button 59, so that a resumption command is inputted through the inputting section 36 (step S504).

Upon reception of the resumption command, the controller 39 controls the respective sections in the printer 10, thereby resuming the pending job. The updating section 34 updates the job management table 21 in accordance with the command from the controller 39, so that the status information in the status field 21-3 is changed from the "ON-HOLD" to "IN-QUEUE". At this moment, the status field 21-3, corresponding to the job ID "J0004," of the job management table 21 (Fig. 12C) holds the status information "IN-QUEUE" as shown in Fig. 12A.

The updating section 34 updates the pending job table 22, in other words, the respective data corresponding to the job ID "J0004" as shown in Fig. 3A (step S506) is deleted. This completes the pending job processing.

The operator user notices the error screen 57 at S504 and depresses the abortion button 60 to halt the pending job, so that the inputting section 36 inputs an abortion command (step S507).

In response to the abortion command, the controller 39 causes the respective sections to halt the pending job. The updating section 34 updates the job management table 21 in accordance with the command from the controller 39, so that the respective data corresponding to the pending job is deleted from the job management table 21 (step S508). As a result, the respective data corresponding to the job ID "J0004" is deleted from the job management table 21.

The updating section 34 updates the pending job table 22 (step S509). In other words, the respective data corresponding to the job ID "J0004" as shown in Fig. 3A is detected from the pending job table 22. This completes the pending job processing in the printer 10.

As described above, when the printer 10 enters the pending job processing, the error screen 57 is displayed and the operator user is informed of the existence of a pending job, so that the operator user can select either resumption or abortion of the pending job.

If the operator user selects resumption of the pending job, the content of the status field 21-3 of the job management table 21 is updated with "IN-QUEUE", and the executing section 31 detects the pending job (Fig. 11, step S201) which is then executed as a job-in-queue.

The printer 10 may be configured such that when the operator user selects resumption of the pending job, a setting modifying screen for modifying the paper data is displayed and the paper data in the job management table 21 can be changed in accordance with the key operation by the operator user.

While the operator user who is an original user is logged on, if either the error "PAPER OUT" or the error "NO OPTIMUM PAPER" occurs in the print job and therefore the print job is placed on hold, the printer 10 immediately enters the pending job processing as shown in Fig. 15.

As described above, when an error occurs in the middle of execution, if the immediately following job-in-queue can be printed, the print job in error is placed on hold and the immediately following job in queue is executed, thereby providing efficient utilization of the printer 10. Since the printer 10 displays the error information only when the original user logs on, the display section is available for other users almost any time. Print jobs are not aborted or the settings for the print jobs are not changed without the user's intention, improving the convenience of users.

Although the pending job processing (Fig. 15) has been described with respect to a single pending job for an operator user who is an original user, the pending job processing may be performed for a plurality of pending jobs, in which case the plurality of pending jobs are displayed on the error screen 57. The operator user selects one of the pending jobs, and then inputs the resumption command or the abortion command.

When an error such as "PAPER OUT" or "NO OPTIMUM PAPER" occurs in the middle of a print job, the print job is placed on hold. However, the printer 10 may also be configured to perform a function of transferring the pending job to another printer. A decision may be made to determine whether a print job should be placed on hold or should be transferred to another printer depending on where in the print job an error occurs. For example, if an error occurs shortly after having printed early several pages of a total 100 pages, then the entire print job may be transferred to another printer. If an error occurs shortly after having printed almost half the total of 100 pages, the print job may be placed on hold.

Still alternatively, the printer 10 may be configured such that if an operator user logs on and replenishes the paper after the print job has been placed on hold due to the error "PAPER OUT", the pending job for the operator user is given priority to print.

### Second Embodiment

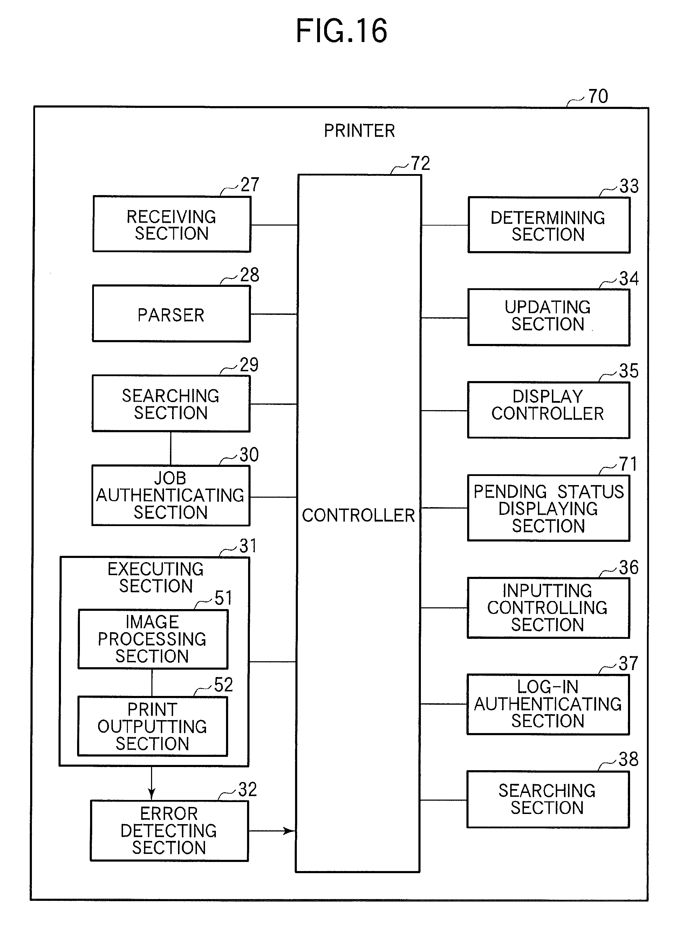

Fig. 16 is block diagram illustrating the functions of the respective sections of a printer 70 according to a second embodiment. The second embodiment differs from the first embodiment in that a pending status displaying section 71 is added to the printer 70. The printer 70 is of the same configuration as the printer 10 (Fig. 1) of the first embodiment and the detail description is omitted.

Referring to Fig. 16, the printer 70 includes a receiving section 27, a parser 28, a searching section 29, a job authenticating section 30, an executing section 31, an error detecting section 32, determining section 33, an updating section 34, a display controller 35, a pending status displaying section 71, an inputting section 36, a log-in authenticating section 37, user name comparing section 38, and a controller 72.

If a pending job exists in the printer 70, the pending status displaying section 71 adds a pending job notifying icon 73 to a log-in screen under the control of the controller 72, thereby notifying the presence of pending jobs.

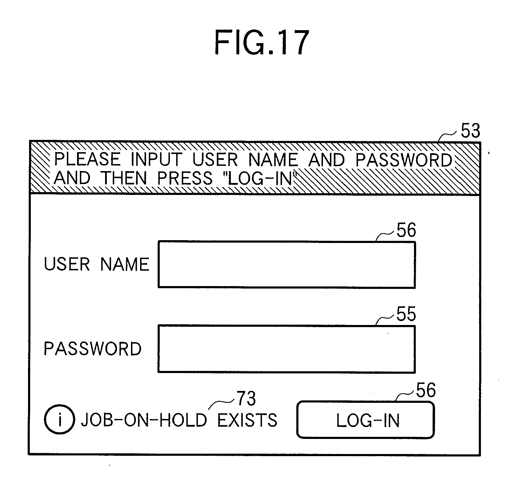

Fig. 17 illustrates an example of the log-in screen. A log-in screen 53 appears in a touch screen LCD panel 25 of the printer 70 when no operator user is currently logged on. When a print job is placed on hold, the pending status displaying section 71 displays the pending job notifying icon 73 in a predetermined area of the log-in screen 53 upon a command from the controller 72. When no pending job exists, the pending status displaying section 71 causes, upon reception of a command from the controller 72, the pending job notifying icon 73 to disappear from the log-in screen 53.

The pending job notifying icon 73 appears in the log-in screen 53 only when a pending job exists. Alternatively, an icon may be displayed at all times to indicate the presence and absence of a pending job. Further, the original user name of the pending job and the content and time of error may be displayed in addition to the presence and absence of a pending job.

The controller 72 controls the respective sections of the printer 70. Also, the controller 72 causes the pending status displaying section 71 to display or not to display the pending job notifying icon 73.

The operation of the printer 70 will be described.

A job receiving operation (Fig. 10), a job executing processing (Fig. 11), and a log-on processing (Fig. 11) are the same as those of the first embodiment and their description is omitted.

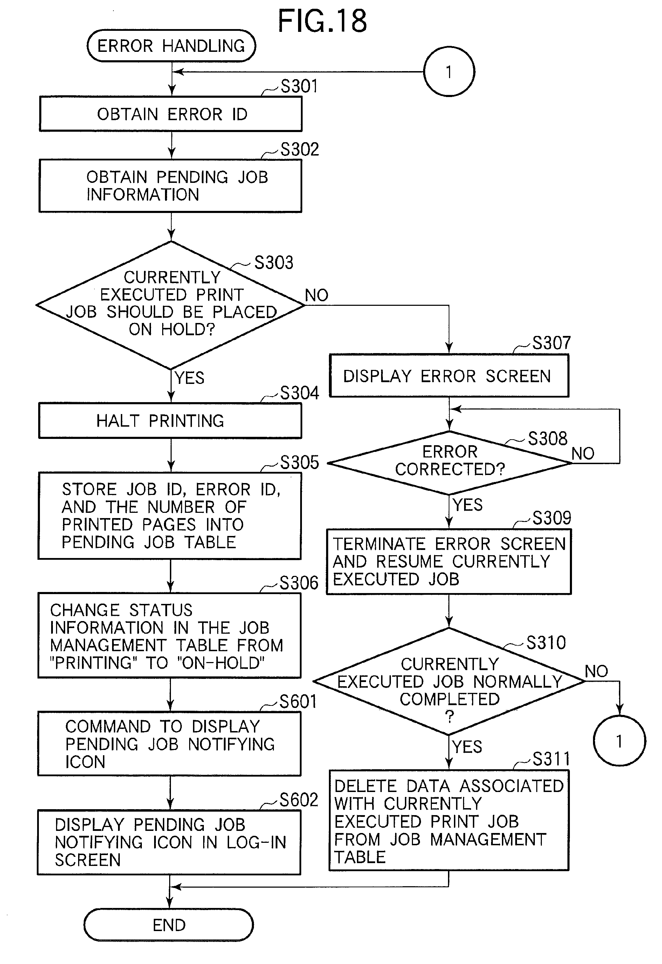

Fig. 18 is a flowchart illustrating an error handling in the second embodiment. A description will be given of the error handling when an error occurs in the middle of a print job.

The error handling when the error "PAPER JAM" is the same as that of the first embodiment and its description is omitted. Therefore, a description will be given of the error handling when either the error "PAPER OUT" or the error "NO OPTIMUM PAPER" occurs.

Upon detection of occurrence of error in the executing section 31, the error detecting section 32 obtains a corresponding error ID and notifies the controller 72 of the error ID (step S301).

Under the control of the controller 72, the searching section 29 searches the error information table 24 to obtain pending job information "YES" corresponding to the error ID and notifies the controller 72 of the pending job information (step S302).

Based on the pending job information "YES," the determining section 33 determines that the currently executed job should be placed on hold, and notifies the controller 72 of the decision result (step S303).

The controller 72 controls the respective sections in the printer 70 so as to place the currently executed job on hold. In response to the command from the controller 72, the executing section 31 halts the print job currently executed by an image processing section 51 and a print outputting section 52 (step S304). More specifically, the image processing section 51 halts producing the image data for the print job and erases all data in an image buffer in a RAM 13 including data that is currently being generated and has been generated. The print outputting section 52 halts generation of image data and then notifies the controller 72 of the number of printed pages.

An updating section 34 updates a pending job table 22. More specifically, the updating section 34 stores the job ID, the error ID, and the number of printed pages of a currently executed job that is to be placed on hold (step S305).

The updating section 34 updates the content of the status field 21-3 of the job management table 21, which corresponds to the job that was placed on hold, by changing the status information from "BEING EXECUTED" to "ON-HOLD," thereby categorizing that currently executed job as a pending job (step S306).

Subsequently, the controller 72 causes the pending status displaying section 71 to display the pending job notifying icon 73 (step S601).

Under the control of the controller 72, the pending status displaying section 71 displays the pending job notifying icon 73 at a predetermined position in the log-in screen 53 (step S602). This completes the error handling of the printer 10.

As described above, once a print job is placed on hold, the pending job notifying icon 73 appears on the log-in screen 53, thereby indicating to the operator user that a pending job exists. The pending job notifying icon 73 remains displayed until a command is outputted from the controller 72.

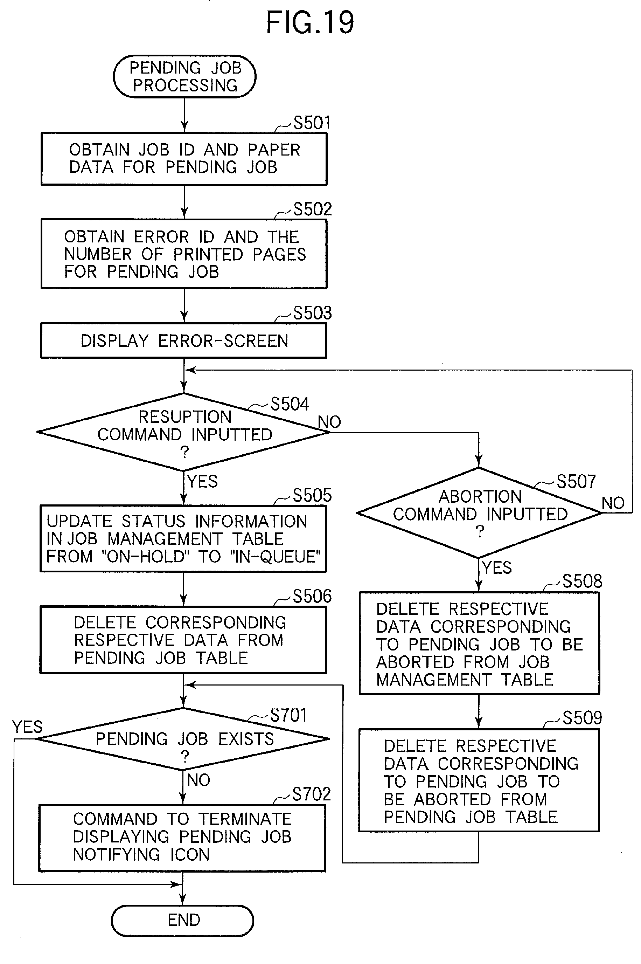

Fig. 19 is a flowchart illustrating the pending job processing of the second embodiment.

After an operator user who is the original user of the pending job is logged on, the pending job processing is executed. The pending job processing will be described with reference to Fig. 19.

After the operator user is logged on and the user name comparing section 38 determines that a pending job for the operator user exists, the user name comparing section 38 obtains the job ID and paper data for the pending job from the job management table 21 and notifies the controller 72 of the job ID and the paper data (step S501).

Subsequently, the searching section 29 searches the pending job table 22, thereby obtaining a corresponding error ID and the number of printed pages and notifying the error ID and the number of printed pages (step S502).

Under the control of the display controller 35, the touch screen LCD panel 25 displays the pending error screen 57 (Fig. 9) (step S503). More specifically, the display controller 35 displays the pending error screen 57 on the touch screen LCD panel 25 based on the screen data corresponding to the error ID, the pending error screen 57 containing the job ID and the number of printed pages.

The operator notices the pending error screen 57 and replenishes the paper, which meets the paper data, into the paper cassette 17, and then depresses the resumption button 59 so as to resume the pending job. Then, the resumption command is inputted through the input controlling section 6 (step S504).

In response to the command from the controller 72, the updating section 34 updates the job management table 21 so that the content of the status field 21-3 changes the status information from "ON-HOLD" to "IN-QUEUE", thereby categorizing the pending job as a job-in-queue (step S505).

The updating section 34 updates the pending job table 22, i.e., the respective data corresponding to the pending job is deleted from the pending job table 22 to determine whether a pending job exists (step S701).

If a pending job exists (YES at step S701), the pending job processing completes.

If no pending job exists (NO at step S701), the controller 72 commands the pending status displaying section 71 to stop displaying the pending job notifying icon 73 (step S702). In response to the command, the pending status displaying section 71 terminates displaying the pending job notifying icon 73 in the log-in screen 53. This completes the pending job processing.

At step S504, the user notices the error screen 57 and then depresses an abortion button 60 so that an abortion command is inputted through the inputting section 36 (step S507).

In response to the command from the controller 72, the updating section 34 updates the job management table 21, i.e., the respective data for the pending job is deleted (step S508).

The updating section 34 updates the pending job table 22, i.e., the respective data for the aborted pending job is deleted (step S509).

Subsequently, the controller 72 checks the pending job table 22 to determine whether a pending job exists (step S701). If a pending job does not exist (NO at S701), then the controller 72 causes the pending job notifying icon 73 to disappear (step S702). This completes the pending job processing.

As described above, when all of the pending jobs have been deleted after the pending error screen is displayed and resumption or abortion of the pending job is selected, the pending job notifying icon 73 is erased from the log-in screen 53.

As described above, when a print job is placed on hold, the log-in screen displays whether a pending job exists. This allows the user to recognize the existence of a pending job without having to log on, improving the convenience of the user.

While the embodiments have been described with respect to an electrophotographic LED printer, the present invention is not limited to this, the invention may be applicable to digital multifunction apparatus having fax and scanner functions, facsimile machines and copying machines.

## Claims

1. An image forming apparatus, comprising:
a receiving section (27) for receiving a plurality of print jobs each of which contains a corresponding original user information;
a job managing section (21, 21-3) for storing the plurality of print jobs as jobs-in-queue;
an executing section (31) for executing the jobs-in-queue each of which is a currently executed job when it is executed;
a controller (39) for causing the executing section (31) to execute the jobs-in-queue in sequence;
an error detecting section (32) for detecting occurrence of an error in the executing section when the currently executed job is being executed, and then for obtaining error information indicative of the error from the executing section;
a determining section (33) for determining, based on the error information, whether the currently executed job should be placed on hold;
an updating section (34) for updating the job managing section (21, 21-3) by storing the currently executed job as a job-on-hold into the job managing section if the determining section (33) determines that the currently executed job should be placed on hold;
a log-in section (36) for an operator user to input operator user information for log-in authentication;
a log-in authenticating section (37) for performing authentication of the operator user based on the operator user information;
a user name comparing section (38) for searching, upon establishment of the authentication, the job managing section (21, 21-3) to determine whether the operator user information and the original user information contained in the job-on-hold coincide; and
a displaying section (16, 25) for indicating to the operator user that a job-on-hold exists, the indication being made if the operator user information coincides with the original user information contained in the job-on-hold.

2. The image forming apparatus according to claim 1 further comprising a job authenticating section for performing authentication of an original user based on the original user information;
wherein the job managing section stores a print job as a job-in-queue upon successful authentication by the job authenticating section (30).

3. The image forming apparatus according to claim 2 further comprising a user information storage area (23) that stores the user information about registered users,
wherein the job authenticating section (30) performs authentication by checking whether the user information storage area stores user information that coincides with the original user information.

4. The image forming apparatus according to claim 3, wherein the user information includes user identifying information and a password.

5. The image forming apparatus according to claim 1 further comprising:
a pending job table (22) that stores job identification information, error information, and the number of printed pages of the job-on-hold; and
a searching section (29) that searches the pending job table to obtain the error information and the number of printed pages associated with the job identification information;
wherein the job managing section (21) stores the job identification information of the print jobs;
wherein the searching section obtains job identification information from the job managing section (21) if the user name comparing section (38) determines that the operator user information and the original user information contained in the job-on-hold coincide, and then the searching section (29) obtains the error information and the number of printed pages associated with the job identification information from the pending job table (22),
wherein the displaying section (16, 25) displays the error information and the number of printed pages to the operator user.

6. The image forming apparatus according to claim 5 further comprising a command receiving section (59) for receiving a resumption command for resuming execution of the job-on-hold;
wherein the displaying section (16, 25, 57) prompts the operator user either to resume or to abort the job-on-hold;
wherein the command inputting section (59) receives a resumption command from the operator user when the operator operates the displaying section (16, 25, 57);
wherein the executing section (31) executes a remaining portion of the job-on-hold based on the number of printed pages in response to the resumption command.

7. The image forming apparatus according to claim 6 wherein when the executing section (31) completes execution of the job-on-hold, the updating section deletes the job-on-hold from the job managing section and deletes the error information and the number of printed pages associated with the job-on-hold from the pending job table (22).

8. The image forming apparatus according to claim 1, wherein when the executing section (31) completes execution of the currently executed job, the executing section (31) deletes the job-in-queue corresponding to the currently executed job from the job managing section.

9. The image forming apparatus according to claim 1, wherein the executing section (31) includes an image forming section (18) that forms an image on a medium while transporting the medium through the image forming section (18),
wherein the determining section (33) determines based on the error information whether an error associated with the error information exists in the image forming section (18),
wherein if the error does not exist in the image forming section (18), the determining section (33) determines that the currently executed job should be placed on hold.

10. The image forming apparatus according to claim 1 further comprising:
an error information table (24) that stores the error information (24-1, 24-2) and associated pending job information (24-3) indicative of whether the currently executed job should be placed on hold,
wherein the determining section (33) obtains pending job information from the error information table (24), the pending job information being associated with the error information obtained by the error detecting section (32), and then determines based on the error information obtained by the error detecting section (32) whether the currently executed job should be placed on hold;

11. The image forming apparatus according to claim 1 wherein the job managing section stores status information indicative of the print job is in a queue, the print job is being executed, or the print job is on hold,
wherein the updating section is configured to update the status information,
and
wherein the user name comparing section is configured to search for status information indicative of a job-on-hold and to determine, based on the original user information contained in the print job, whether the operator user information and the original user information contained in the job-on-hold coincide.

12. The image forming apparatus according to claim 1, comprising a pending error screen (57) configured to display whether the job managing section (21) stores a job-on-hold.

13. The image forming apparatus according to claim 1, wherein the displaying section (57, 16, 25) is configured to prompt the operator user either to resume or to abort the job-on-hold.

14. The image forming apparatus according to claim 1, further comprising the user information storage area for storing user information about individual users,
wherein the log-in authenticating section is configured to perform authentication by checking whether the stored user information coincides with the operator information.

15. The image forming apparatus according to claim 14, wherein the user information includes:
user identifying information and a password, and/or
a personal identification number, and/or
biometric information.

16. The image forming apparatus according to claim 1, wherein the log-in section (25, 53) is configured to obtain the operator user information from an IC card of the operator user.
